# EUROPÄISCHE PATENTANMELDUNG

(11) **EP 3 795 231 A1**
(43) Veröffentlichungstag der Anmeldung: **24.03.2021**
(21) Anmeldenummer: 20190117.0
(22) Anmeldetag: 07.08.2020
(51) Int. Cl.: B01D 46/00, F01N 3/021, F01N 3/022

(54) **FILTER ZUR ABGASNACHBEHANDLUNG**

(30) Priorität: 20.09.2019 DE 102019214362
(71) Anmelder: Vitesco Technologies GmbH, 30165 Hannover (DE)
(72) Erfinder: Schepers, Sven, 65824 Schwalbach a. Ts. (DE); Hirth, Peter, 65824 Schwalbach a. Ts. (DE); Odenthal, David, 65824 Schwalbach a. Ts. (DE)

(57) **Zusammenfassung**

Die Erfindung betrifft einen Filter (1) zur Reinigung von Abgasen eines Verbrennungsmotors, insbesondere eines Ottomotors, mit einem von Abgas in axialer Richtung durchströmbarem Gehäuse mit einer Einströmseite (2) und mit einer Ausströmseite (3), wobei in dem Gehäuse aus einer Mehrzahl von Filterlagen ein Filterkörper gebildet ist, der von dem durch das Gehäuse strömbarem Abgas durchströmbar ist, wobei die Filterlagen ringförmig ausgebildet sind und konzentrisch zueinander angeordnet sind, wobei alternierend zwei in radialer Richtung zueinander benachbarte Filterlagen an der Einströmseite (2) miteinander fluiddicht verbunden sind und zwei in radialer Richtung zueinander benachbarte Filterlagen an der Ausströmseite (3) miteinander verbunden sind, wobei der Filterkörper einen sich in axialer Richtung erstreckenden offenen Kanal (4) entlang seiner Mittelachse aufweist, wobei dieser Kanal (4) durch eine Verschlusselement (5) verblockt ist.

## Beschreibung

### Technisches Gebiet

Die Erfindung betrifft einen Filter zur Reinigung von Abgasen eines Verbrennungsmotors, insbesondere eines Ottomotors, mit einem von Abgas in axialer Richtung durchströmbarem Gehäuse mit einer Einströmseite und mit einer Ausströmseite, wobei in dem Gehäuse aus einer Mehrzahl von Filterlagen ein Filterkörper gebildet ist, der von dem durch das Gehäuse strömbarem Abgas durchströmbar ist, wobei die Filterlagen ringförmig ausgebildet sind und konzentrisch zueinander angeordnet sind, wobei alternierend zwei in radialer Richtung zueinander benachbarte Filterlagen an der Einströmseite miteinander fluiddicht verbunden sind und zwei in radialer Richtung zueinander benachbarte Filterlagen an der Ausströmseite miteinander verbunden sind.

### Stand der Technik

Die Abgase von Verbrennungsmotoren enthalten neben den gasförmigen Bestandteilen auch Festkörper, die als Partikel mit dem Abgas strömen. Diese Partikel treten, sofern sie nicht einer geeigneten Nachbehandlung unterzogen werden, mit dem Abgas in die Umwelt aus und können dort zu Verschmutzungen und chemischen Belastungen führen. Insbesondere ausreichend kleine Partikel, die teilweise lungengängig sind, können zu gesundheitlichen Belastungen der Menschen führen.

Um das Austreten dieser Partikel in die Umwelt zu verhindern müssen geeignete Filter im Abgasstrang vorgesehen werden. Filter dieser Art sind in vielfältigen Varianten im Stand der Technik bekannt. Diese sind im Wesentlichen für den Einsatz in Abgassträngen von Dieselmotoren konzipiert und ausgelegt. Da zukünftig auch verstärkt die Abgasnachbehandlung in Benzinmotoren in den Fokus rücken wird, ist es notwendig Filter für den Abgasstrang von Benzinmotoren, insbesondere von direkt einspritzenden Benzinmotoren, bereitzustellen, die an die höheren Temperaturniveaus und die abweichenden Drücke des Abgases angepasst sind. Weiterhin müssen die Filter auf die speziell bei der Verbrennung von Benzin auftretenden Partikelgrößen abgestimmt sein.

### Darstellung der Erfindung, Aufgabe, Lösung, Vorteile

Daher ist es die Aufgabe der vorliegenden Erfindung einen Filter zu schaffen, welche eine optimierte Wirkungsweise aufweist und insbesondere eine optimierte Bauform aufweist, so dass die Filterwirkung maximiert wird und das ungefilterte Vorbeiströmen von Abgas am Filter vermieden wird.

Die Aufgabe hinsichtlich des Filters wird durch einen Filter mit den Merkmalen von Anspruch 1 gelöst.

Ein Ausführungsbeispiel der Erfindung betrifft einen Filter zur Reinigung von Abgasen eines Verbrennungsmotors, insbesondere eines Ottomotors, mit einem von Abgas in axialer Richtung durchströmbarem Gehäuse mit einer Einströmseite und mit einer Ausströmseite, wobei in dem Gehäuse aus einer Mehrzahl von Filterlagen ein Filterkörper gebildet ist, der von dem durch das Gehäuse strömbarem Abgas durchströmbar ist, wobei die Filterlagen ringförmig ausgebildet sind und konzentrisch zueinander angeordnet sind, wobei alternierend zwei in radialer Richtung zueinander benachbarte Filterlagen an der Einströmseite miteinander fluiddicht verbunden sind und zwei in radialer Richtung zueinander benachbarte Filterlagen an der Ausströmseite miteinander verbunden sind, wobei der Filterkörper einen sich in axialer Richtung erstreckenden offenen Kanal entlang seiner Mittelachse aufweist, wobei dieser Kanal durch eine Verschlusselement verblockt ist.

Der Filterkörper ist insgesamt derart aufgebaut, dass Abgas von der Einströmseite in die zwischen den konzentrisch zueinander angeordneten Filterlagen ausgebildeten Strömungskanäle einströmen kann. Das Abgas strömt hierbei entlang einer axialen Richtung in die Strömungskanäle ein. Die Strömungskanäle sind bauartbedingt jedoch hin zur Ausströmseite verschlossen, wodurch das Abgas eine Umlenkung in radialer Richtung erfährt. Die Filterlagen sind derart ausgebildet, dass das Abgas diese durchströmen kann, Partikel einer gewissen definierten Mindestgröße aber von den Filterlagen zurückgehalten werden. Das Abgas kann somit durch die radiale Umlenkung in die jeweils benachbarten Strömungskanäle überströmen, die sich von der Einströmseite hin zur Ausströmseite erstrecken. Nach dem Übergang in den radial benachbart angeordneten Strömungskanal kann das Abgas in axialer Richtung hin zur Ausströmseite strömen und schließlich aus dem Filterkörper ausströmen.

Durch die fluiddichte Verbindung der jeweiligen Filterlagen an der Einströmseite und der Ausströmseite wird eine direkte Durchströmung in axialer Richtung vermieden.

Bauartbedingt weist der Filter jedoch einen zentralen sich in axialer Richtung erstreckenden Kanal auf, der durch die Filterlagen nicht gasdicht verschlossen werden kann. Sofern dieser Kanal offenbleibt, wird aufgrund des durch die Filteralge erzeugten Gegendrucks das Abgas fast vollständig durch diesen offenen Kanal strömen, wodurch die Filterwirkung des Filters drastisch reduziert werden würde. Daher ist bevorzugt ein Element vorgesehen, durch welches dieser zentrale offene Kanal verschlossen werden kann.

Besonders vorteilhaft ist es, wenn der Kanal durch ein gasundurchlässiges Element verblockt ist, wobei das Element gasdicht mit der Einströmseite der den offenen Kanal bildenden Filterlage verbunden ist. Ein gasdichtes Element, beispielsweise ein metallischer Festkörper verhindert vollständig die Durchströmung des zentralen Kanals und zwingt so den gesamten Abgasstrom durch die von den Filterlagen aufgespannten Strömungskanäle.

Auch ist es vorteilhaft, wenn der Kanal durch ein zumindest teilweise gasdurchlässiges Element gebildet ist, wobei das Element gasdicht mit der Einströmseite der den offenen Kanal bildenden Filterlage verbunden ist. Ein zumindest teilweise gasdurchlässiges Element, beispielsweise ein Filtervlies oder ein poröses Material, verhindert ebenfalls die Durchströmung des zentralen Kanals mit einem sehr geringen Gegendruck. Gleichzeitig wird aber nicht die gesamte Abgasströmung auf die durch die Filterlagen aufgespannten Strömungskanäle abgelenkt. Ein Teil des Abgases kann auch das zumindest teilweise gasdurchlässige Element durchströmen. Der Anteil des das teilweise gasdurchlässige Element durchströmenden Abgases wird im Wesentlichen durch den von dem Element erzeugten Gegendruck bestimmt. Das Element kann eine zusätzliche Filterwirkung erzeugen.

Ein bevorzugtes Ausführungsbeispiel ist dadurch gekennzeichnet, dass der durch das zumindest teilweise gasdurchlässige Element im zentralen Kanal verursachte Gegendruck gleich groß oder höher ist als der durch die restlichen Filterlagen erzeugte Gegendruck.

Bevorzugt ist der Gegendruck durch das Element im zentralen Kanal gleich hoch oder höher als der Gegendruck, welcher durch die Filterlagen in den restlichen Strömungskanälen erzeugt wird. Wäre der Gegendruck geringer, würde ebenfalls die Durchströmung der Strömungskanäle zwischen den Filterlagen reduziert, wodurch die Filterwirkung verschlechtert werden würde.

Auch ist es zu bevorzugen, wenn der durch das zumindest teilweise gasdurchlässige Element erzeugte Gegendruck in Abhängigkeit vom Verwendungszweck des Filters anpassbar ist. Dies ist vorteilhaft, um einen möglichst variablen Filter zu erzeugen. Abhängig vom Anwendungszweck kann die Porosität des Elementes beziehungsweise das Material des Elementes überhaupt verändert werden und so der Gegendruck angepasst werden.

Darüber hinaus ist es vorteilhaft, wenn der durch den Filter entstehende Gegendruck anpassbar ist, wobei insbesondere die Wandstärke der Filterlagen, die Durchmesser der durch die Filterlagen erzeugten Strömungskanäle variabel sind, der Durchmesser des zentralen offenen Kanals variabel ist, der Durchmesser der zur Ausbildung der Filterlagen verwendete Draht variable ist und die Porosität der Filterlagen variabel ist.

Durch die Variation des Materials, der Dimensionierung der Strömungskanäle und besonders der Porosität der gasdurchlässigen Elemente, wie beispielsweise der Filterlagen und des zentralen teilweise gasdurchlässiges Elementes, kann der vom Filter verursachte Gegendruck sehr genau an den jeweiligen Einsatzweck angepasst werden. Dabei muss der grundlegende Aufbau des Filters jedoch nicht verändert werden. Dies ist vorteilhaft, da der Filter so leicht anpassbar ist.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand eines Ausführungsbeispiels unter Bezugnahme auf die Zeichnung detailliert erläutert. In der Zeichnung zeigt:

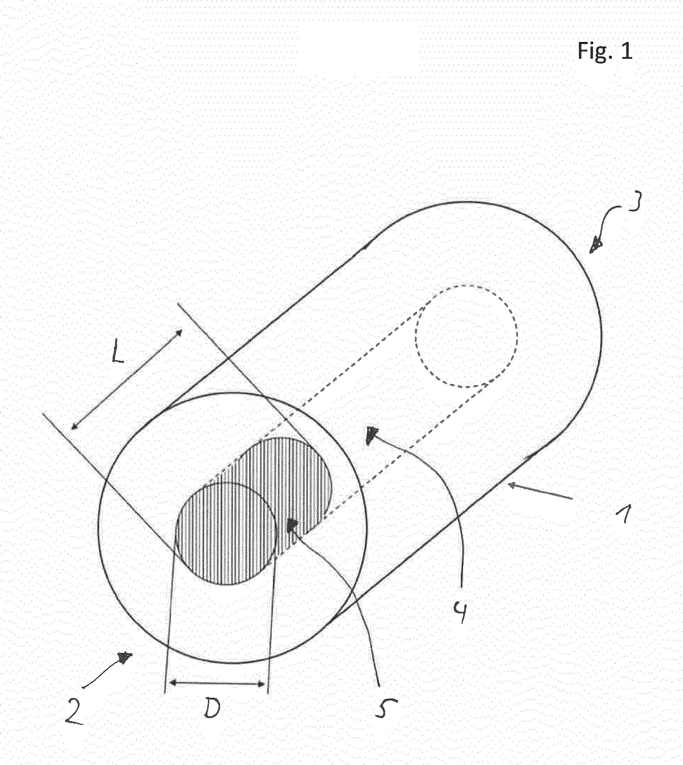

- Fig. 1: eine perspektivische Ansicht eines Filters, wobei insbesondere der zentrale Kanal dargestellt ist, der durch ein Element gasdicht oder teilweise gasdurchlässig verschlossen wird.

### Bevorzugte Ausführung der Erfindung

Die Figur 1 zeigt eine perspektivische Ansicht eines Filter 1. Der grundsätzliche Aufbau des Filters mit den abwechselnd an der Einströmseite 2 und der Ausströmseite 3 verschlossenen Filterlagen ist nur angedeutet. Zentral entlang der axialen Erstreckung ist ein Kanal 4 angedeutet, der bauartbedingt nicht zwischen den Filterlagen gasdicht verschlossen werden kann. Je nach Krümmungsradius der innersten Filterlage kann der Durchmesser dieses Kanals 4 größer oder kleiner sein.

Sofern dieser Kanal 4 nicht verschlossen wird, wird das Abgas durch diesen offenen Kanal 4 strömen und die eigentlichen Filterlagen nicht durchströmen. Um dies zu verhindern ist in dem offenen Kanal 4 ein Element 5 angeordnet, welches sich über eine definierte Länge L entlang der axialen Erstreckung des Filters 1 erstreckt.

Das Element 5 ist in Figur 1 auf der Einströmseite 2 des Filters 1 mit der in radialer Richtung betrachtet innersten Filterlage des Filters 1 gasdicht verbunden, wodurch der Kanal 4 verschlossen wird. Von dem Element 5 und insbesondere seinen Eigenschaften hinsichtlich der Gasdurchlässigkeit hängt es ab in welchem Maße die Durchströmung der übrigen zwischen den Filterlagen aufgespannten Strömungskanäle durchströmt werden.

Das Element 5 erstreckt sich entlang der axialen Richtung des Filters 1 um die Länge L und weist einen Durchmesser D auf, welcher bevorzugt dem Durchmesser des Kanals 4 entspricht.

Das Ausführungsbeispiel der Figur 1 weist insbesondere keinen beschränkenden Charakter auf und dient der Verdeutlichung des Erfindungsgedankens.

## Patentansprüche

1. Filter (1) zur Reinigung von Abgasen eines Verbrennungsmotors, insbesondere eines Ottomotors, mit einem von Abgas in axialer Richtung durchströmbarem Gehäuse mit einer Einströmseite (2) und mit einer Ausströmseite (3), wobei in dem Gehäuse aus einer Mehrzahl von Filterlagen ein Filterkörper gebildet ist, der von dem durch das Gehäuse strömbarem Abgas durchströmbar ist, wobei die Filterlagen ringförmig ausgebildet sind und konzentrisch zueinander angeordnet sind, wobei alternierend zwei in radialer Richtung zueinander benachbarte Filterlagen an der Einströmseite (2) miteinander fluiddicht verbunden sind und zwei in radialer Richtung zueinander benachbarte Filterlagen an der Ausströmseite (3) miteinander verbunden sind, **dadurch gekennzeichnet, dass** der Filterkörper einen sich in axialer Richtung erstreckenden offenen Kanal (4) entlang seiner Mittelachse aufweist, wobei dieser Kanal (4) durch eine Verschlusselement (5) verblockt ist.

2. Filter (1) nach Anspruch 1, **dadurch gekennzeichnet, dass** der Kanal (4) durch ein gasundurchlässiges Element (5) verblockt ist, wobei das Element (5) gasdicht mit der Einströmseite (2) der den offenen Kanal (4) bildenden Filterlage verbunden ist.

3. Filter (1) nach Anspruch 1, **dadurch gekennzeichnet, dass** der Kanal (4) durch ein zumindest teilweise gasdurchlässiges Element (5) gebildet ist, wobei das Element (5) gasdicht mit der Einströmseite (2) der den offenen Kanal (4) bildenden Filterlage verbunden ist.

4. Filter (1) nach Anspruch 3, **dadurch gekennzeichnet, dass** der durch das zumindest teilweise gasdurchlässige Element (5) im zentralen Kanal (4) verursachte Gegendruck gleich groß oder höher ist als der durch die restlichen Filterlagen erzeugte Gegendruck.

5. Filter (1) nach einem der vorhergehenden Ansprüche 3 oder 4, **dadurch gekennzeichnet, dass** der durch das zumindest teilweise gasdurchlässige Element (5) erzeugte Gegendruck in Abhängigkeit vom Verwendungszweck des Filters (1) anpassbar ist.

6. Filter (1) nach einem der vorhergehenden Ansprüche, **dadurchgekennzeichnet**, **dass** der durch den Filter (1) entstehende Gegendruck anpassbar ist, wobei insbesondere die Wandstärke der Filterlagen, die Durchmesser der durch die Filterlagen erzeugten Strömungskanäle variabel sind, der Durchmesser (D) des zentralen offenen Kanals (4) variabel ist, der Durchmesser der zur Ausbildung der Filterlagen verwendete Draht variable ist und die Porosität der Filterlagen variabel ist.
